Europäisches Patentamt

European Patent Office

Office européen des brevets

(19)

(11) Publication number: **0 087 266**
**B1**

(12) **EUROPEAN PATENT SPECIFICATION**

(45) Date of publication of patent specification: **02.08.89**

(51) Int. Cl.⁴: **G 06 F 13/00**

(21) Application number: **83300778.4**

(22) Date of filing: **16.02.83**

(54) Priority resolver circuit.

(30) Priority: **19.02.82 US 350537**

(43) Date of publication of application:
**31.08.83 Bulletin 83/35**

(45) Publication of the grant of the patent:
**02.08.89 Bulletin 89/31**

(84) Designated Contracting States:
**BE CH DE FR GB IT LI NL SE**

(56) References cited:
**EP-A-0 025 731**

(73) Proprietor: **Honeywell Bull Inc.**
**3800 W. 80th Street**
**Minneapolis Minnesota 55431 (US)**

(72) Inventor: **Brown, Richard P.**
**22 Joseph Reed Lane**
**Acton Massachusetts 01720 (US)**
Inventor: **Lemay, Richard A.**
**515 Brook Street**
**Carlisle Massachusetts 01741 (US)**
Inventor: **Steiner, Lewis G.**
**3 Robin Road**
**Milford Massachusetts 01757 (US)**
Inventor: **Woods, William E.**
**79 Woodland Street**
**Natick Massachusetts 01760 (US)**

(74) Representative: **Geissler, Bernhard, Dr. Patent-**
**und Rechtsanwälte et al**
**Bardehle-Pagenberg-Dost- Altenburg-**
**Frohwitter & Partner Postfach 86 06 20**
**D-8000 München 86 (DE)**

Courier Press, Leamington Spa, England.

## Description

This invention relates generally to minicomputers and particularly to a priority resolver mechanism for resolving conflicts between sub-systems vying for access to a shared resource and more particularly to cache memory.

The storage hierarchy concept is based on the phenomen that, in executing a program, a localized area of memory receives a very high frequency usage. Thus, a memory organization that provides a relatively small size buffer (cache memory) at the CPU interface and various levels of increasing capacity slower storage can provide an effective access time that is favourably placed in the range between the fastest and slowest elements of the hierarchy.

There are various means of communication between the various sub-systems and cache memory. In such communication, conflict may result and a priority resolving mechanism is necessary to resolve the conflict.

Generally, priority resolvers inherently have a metastable property resulting from the violation of set-up time, hold time and pulse width specifications which may result in failure to resolve in a predictable period of time. When these specified minimum times are violated, there can be exactly enough energy in the input signal to precisely balance the input and output voltages of the latching circuit. Less energy will not precisely balance the input and output voltages and will allow the latch to settle back into its original state. Likewise, more energy will cause the latch to achieve the new state. Therefore, an extremely small window of time exists which will cause a very long indeterminate state at the output. Recovery from this state is dependent upon available internal imbalanced charging currents and node capacitance. It is possible to reduce this recovery time by suitable design and selection of components, e.g. by providing, for each request signal, cascaded flip-flops which are triggered with staggered delays, as envisaged by EP—A—0025739. However, it is desirable to achieve a further reduction in this timing uncertainty beyond that achievable with known circuit and system designs.

Accordingly the present invention provides a priority resolution circuit as defined by Claim 1.

A computer system embodying the invention will now be described, by way of example, with reference to the drawings, in which:

Figure 1 is a block diagram of the computer system;

Figure 2A is a block diagram of the conflict resolver flip-flops;

Figure 2B is a block diagram of the address selector circuit and its control circuitry; and

Figure 2C is a block diagram of the timing circuit of the conflict resolver.

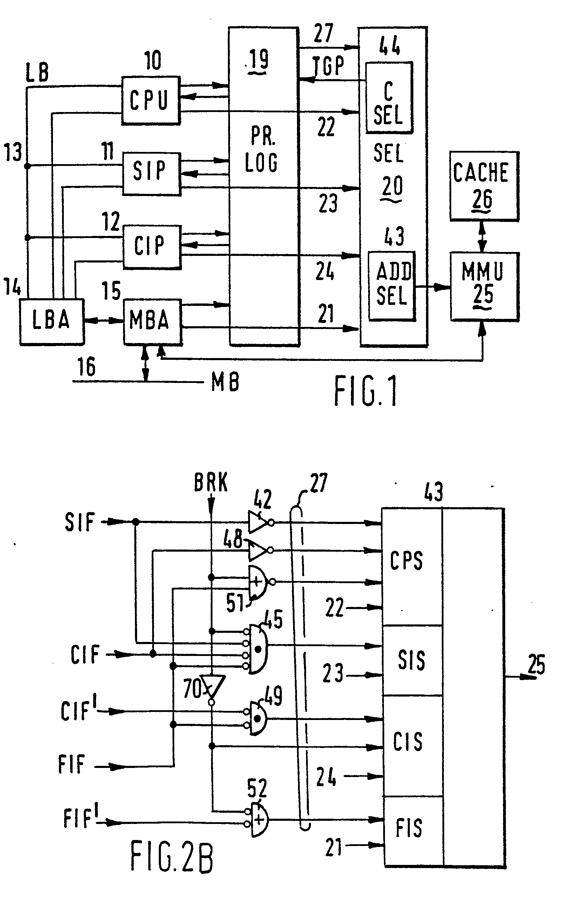

Referring to Figure 1, the data processing system includes a central processing unit (CPU) 10, a scientific instruction processor (SIP) 11, and a commercial instruction processor (CIP) 12, which communicate by way of a local bus 13. Each of the processors further communicates by way of bidirectional communication links with a local bus adapter 14 which includes a memory management unit 25 and a cache memory system 26 (both shown separately). The cache memory system provides a buffer storage for those portions of main memory that are currently being used by the CPU 10, SIP 11, and CIP 12. The memory management unit provides for the translation of virtual memory addresses to physical memory addresses.

The local bus adapter is also coupled to a main bus adapter 15 which provides an interface with a main asynchronous communication bus 16, which is a common communication bus for accommodating a plurality of system devices including I/O controllers and a main memory (not shown).

The local bus adapter 14 includes a conflict resolver logic unit 19 (shown separately) coupled to the CPU 10, the SIP 11, the CIP 12, and the main bus adapter 15. A selector logic unit 20 is responsive to select control signals from the conflict resolver logic unit 19 on control lines 27 to select one of four control busses 21—24 respectively leading from main bus adapter 15, CPU 10, SIP 11, and CIP 12. The information on the selected one of busses 21—24 is forwarded by the selector logic unit 20 to the memory management unit (MMU) 25, which controls access to the cache memory system 26.

In operation, the conflict resolver logic 19 receives access requests from one or more of the main bus adapter 15, CPU 10, SIP 11, and CIP 12. If a request is received during the time period when the local bus adapter 14 is not busy, then the requests are handled in accordance with the order of their arrival. If a request is received after the local bus adapter 14 is busy, the request is temporarily denied. If multiple requests are received while the local bus adapter 14 is not busy, then a request received for example from CPU 10 is stored by a flip-flop within the conflict resolver logic unit 19. Until that flip-flop becomes stable, there is a period of time during which a high priority request may be received and honoured after a lower priority request has been received. It is essential to the operation of the data processing system that any conflicts be resolved within a specifiable time period in order for designated data processing rates to be achieved. If request pulses are received by the conflict resolver logic unit 19 which are of a time separation less than that required to cause a receiving flip-flop to enter into a stable state, then the receiving flip-flops may enter into a metastable state in which the output of the flip-flop oscillates. The time period required by the conflict resolver logic unit 19 thereupon would be extended beyond commercially accepted time periods. A further problem in a prioritized request resolving system is the access time of a requestor. In the present system request conflicts are resolved in a reduced time period, and the access time of requestors such as the CPU 10 is accordingly reduced also.

In operation, the main bus adapter 15 may for example issue a cache memory access request to the logic unit 19 after the main bus adapter 15 has detected a memory write operation wherein any of the I/O controllers on the main bus 16 have written into memory locations of the main memory on the main bus.

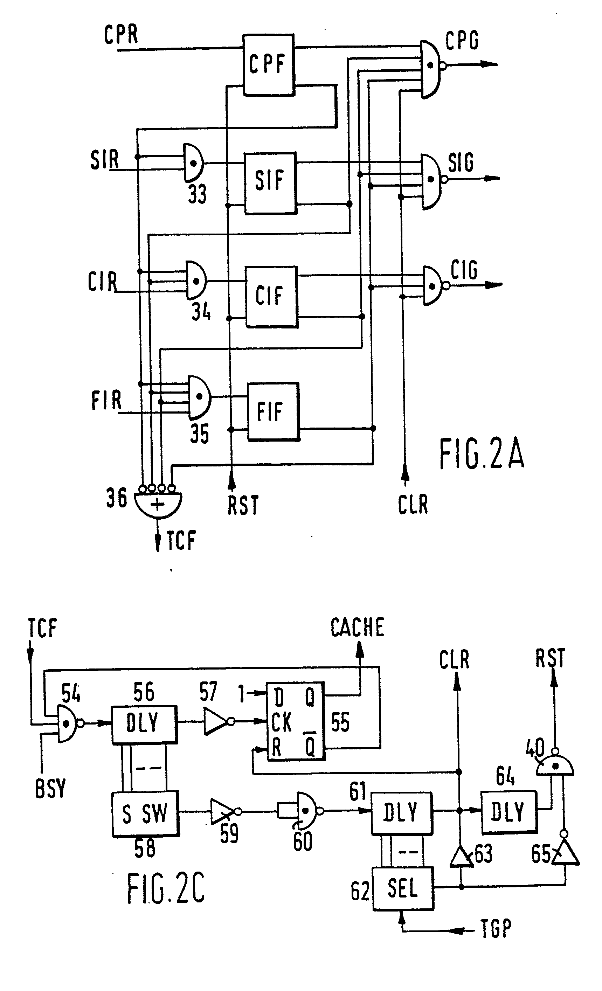

Referring to Figure 2A, there are four RS-type flip-flops CPF, SIF, CIF, and FIF, fed with request signals CPF from the CPU 10, SIR from the SIP 11, CIR from the CIP 12, and FIR from the MBA (main bus adapter) 15 respectively. (A flip-flop is shown with the S and R inputs at top and bottom left respectively, and the direct and complementary outputs at top and bottom right respectively. The same reference is used for flip-flop and its direct output). These flip-flops are interconnected by a chain or ladder of three gates 33 to 35, and also feed three output gates CPG, SIG, and CIG.

The priority sequence is CPU-SIP-CIP-MBA, with the CPU having the lowest priority and the MBA the higher. A request from the lowest prority unit, the CPU, sets flip-flop CPF, and this prevents the subsequent setting of any of the other three flip-flops. However, there is a small time window after a CPR signal appears, before this signal has propagated through flip-flop CPF and to gates 33 to 35, during which a request signal such as CIR can still set one of the other three flip-flops for a higher priority request. Also, of course, if a request signal such as FIR is followed by a lower priority request signal such as SIR, flip-flop FIF will be set by signal FIR and flip-flop SIF will then be set by signal SIR regardless of the prior setting of flip-flop FIF.

The three output gates CPG, SIG, and CIG are arranged so that each produces an output if the corresponding flip-flop is set and no flip-flop of higher priority is set. Each gate feeds the corresponding CPU 10, SIP 11, and CIP 12 as the case may be, and an output from one of these three gates indicates to the associated unit that unit's request is being honoured.

The four flip-flops feed a gate 36 which produces a timing circuit firing pulse, TCF, which triggers the timing circuit (Figure 2C) as soon as any one of the flip-flops is set. This timing circuit, as will be explained later, produces a clear pulse CLR which enables the three gates CPG, SIG, and CIG after the possible "window" for setting a higher priority flip-flop after a lower priority flop-flop has expired, and also produces a reset pulse RST for the four flip-flops.

The outputs of the flip-flops SIF, CIF, and FIF of Figure 2A and a BRK signal on a control line from the main bus adapter MBA 15 are fed to logic circuitry which in turn feeds the address selector 43 over bus 27, Figure 2B. The logic circuit consists of three inverters, 42, 48, and 70 and four gates 51, 45, 49 and 52 are shown. The address selector logic unit 43 has four input ports CPS, SIS, CIS, and FIS which are fed with signals on the bus 27 and with the four respective buses 22, 23, 24, and 21 respectively. The signals on the bus 27 select one of the four ports and hence an address from the respective one of the four units (CPU, SIP, CIP, and MBA) for transmission to the cache memory unit 26. An all O pattern from elements 42, 48, and 51 indicates that the CPU 10 has acquired the local bus cycle, and causes port CPS to be selected; a 1 from gate 45 indicates that the SIP 11 has acquired the local bus cycle, and causes port SIS to be selected; and a 1 from gate 49 indicates that the CIP 12 has acquired the local bus cycle, and causes port CIS to be selected.

The control line selector 44 (Figure 1) has connections identical to those of the address selector 43; however, the selector 44 generates, from the selected one of the buses 21 to 24, a timing generator selector signal TGP.

Figure 2C shows the timing circuitry, which is responsive to the signals TCF and TGP to generate the signals RST and CLR. The TCF signal passes through a gate 54, a delay line 56, and an inverter 57 to the clock input of a flip-flop 55, which has a 1 permanently fed to its D input. The signal TCF indicates a request for a local bus cycle, and the timing chain to flip-flop 55 causes a pulse to appear at its direct or Q output to control the timing of the cache memory unit 26. The resulting delay is sufficient to ensure that transients in the logic system have dissipated. The complementary output of flip-flop 55 is fed back to the gate 54, which is also fed with a BSY (busy) signal.

A selector switch 58 selects a signal from the delay line 56 with a selected delay, and this signal passes through a further delay path (inverter 59, 2-input gate 60, and delay 61) to a timing generator selector 62. The output TGP from the control line selector 44 is fed to the timing generator selector 62, to select one of the taps on the delay line 61. This generates a cache cycle end pulse, which passes through driver 63 to produce the CLR pulse, which is fed to the Figure 2A circuitry and the reset input of flip-flop 55. This cache cycle end pulse is also shaped by the inverter 65, the delay line 64, and the gate 40 to generate the RST pulse. This clears the logic system for further request conflict situations.

The various devices—CPU, SIP, CIP, and MBA—require different kinds of service, and the control line selector 44 selects the type of service cycle appropriate to the requesting device.

**Claims**

1. Priority resolver circuitry for use with a computer system in which a plurality (n) of devices (10, 11, 12, 15; CPU, SIP, CIP, MBA) compete for access to a shared unit (26), each device being accorded a respective relative priority value for obtaining said access, wherein each such device generates a request signal (CPR, SIR, CIR, FIR) when the device requires access and wherein a flip-flop (CPF, SIF, CIF, FIF) is assigned to each device to record, by being in a particular state, the receipt of the corresponding request signal, the priority resolver circuitry being characterized by:

(A) a logic request circuitry (33 to 35) for receiving

(i) all of said request signals except the request signal (CPR) corresponding to the lowest priority device (10; CPU) and

(ii) output signals from all of said flip-flops except the flip-flop (FIF) corresponding to the highest priority device (15; MBA), and responsive to said received signals for delivering control signals for setting to said particular state all of said flip-flops except said lowest priority flip-flop (CPF), each control signal being delivered upon the receipt of a corresponding request signal unless a lower priority flip-flop output signal is being received;

(B) a logic access circuitry (CPG, SIG, CIG) for receiving output signals from all of said flip-flops for delivering a priority-designating signal representing the highest priority device of all devices whose corresponding flip-flops are in said particular state, said priority-designating signal enabling the represented device to obtain access to said shared unit; and

(C) a timing circuitry (Fig. 2C) responsive to the setting of any flip-flop (TCF) to generate a gating pulse (CLR) to enable the logic access circuitry after a time delay sufficient to permit any transient conditions to decay.

2. Priority resolver circuitry of claim 1, characterized by said lowest priority flip-flop (CPF) being directly coupled to receive and to be set to said particular state by the lowest priority request signal (CPR).

3. Priority resolver circuitry of claim 1 or claim 2, characterized in that the logic access circuitry comprise (n−1) gates (CPG, SIG, CIG) which are associated to the said plurality (n) of devices except the highest priority device, the gate (CPG) associated to the lowest priority device (CPU) having (n+1) inputs, i.e. the Q-output of the lowest priority flip-flop (CPF) and the $\overline{Q}$-outputs of the remaining (n−1) next-to-lowest priority flip-flops (SIF, CIF, FIF) and a clear signal 1put (CLR) generated by the timing circuit (Fig. 2c); the gate (SIG) associated to the next-to-lowest priority device (SIP) having (n) inputs, i.e. the (Q)-outputs of the next-to-lowest priority flip-flop (SIF) and the $(\overline{Q})$-outputs of the remaining (n−2) next-to-second-lowest priority flip-flops (CIF, FIF) and the said clear signal input (CLR); and so on up to the gate (CIG) associated to the next-to-highest priority device (CIP) having three inputs, i.e. the (Q)-output of the next-to-highest priority flip-flop (CIF) and the $(\overline{Q})$-output of the highest priority flip-flops (FIF), and the said clear signal input (CLR); the output from any one of the said (n−1) gates (CPG, SIG, CIG) indicates to the respective associated unit that that unit request is being honoured.

4. Priority resolver circuitry according to claim 3, characterized in that the $(\overline{Q})$-outputs of said (n) flip-flops (CPF, SIF, CIF, FIF) are connected to the (n) inputs of an OR gate (36) to produce a timing circuit firing pulse (TCF) which triggers the timing circuit (Fig. 2C) as soon as any one of said flip-flops is set, to produce the said clear signal (CLR) after a short delay sufficient to ensure that transients in the logic circuitry have dissipated.

5. Priority resolver circuitry according to claim 4, characterized in that the timing circuit (Fig. 2C) also generates a reset pulse (RST) for resetting the said flip-flops (CPF, SIF, CIF, FIF), said reset pulse (RST) being generated after generation of said clear signal (CLR).

**Patentansprüche**

1. Prioritätsauflösungsschaltkreis zum Gebrauch mit einem Computersystem, in dem eine Vielzahl (n) von Bauteilen (10, 11, 12, 15; CPU, SIP, CIP, MBA) um den Zugriff zu einer gemeinsamen Einrichtung (26) konkurrieren, wobei jedem Bauteil ein bestimmter relativer Prioritätswert zum Erlangen des Zugriffes zugeteilt wird, wobei jedes Bauteil ein Anforderungssignal (CPR, SIR, CIR, FIR) generiert, wenn das Bauteil einen Zugriff anfordert und wobei jeweils ein Flip-FLop (CPF, SIF, CIF, FIF) jedem Bauteil zugewiesen ist, um, indem es in einem bestimmten Zustand ist, den Empfang des entsprechenden Anforderungssignals aufzuzeichnen, wobei der Prioritätsauflösungsschaltkreis gekennzeichnet ist durch:

(A) einen Logikanforderungsschaltkreis (33—35) zum Empfangen

(i) von sämtlichen Anforderungssignalen, ausgenommen das Anforderungssignal (CPR), welches dem Bauteil mit der niedrigsten Priorität (10; CPU) entspricht und

(ii) von Ausgangssignalen von allen Flip-Flops, ausgenommen das Flip-Flop (FIF), welches dem Bauteil mit der höchsten Priorität (15; MBA) entspricht, und der auf die empfangenen Signale reagiert durch Ausgeben von Kontrollsignalen, die alle Flip-Flops, ausgenommen das Flip-Flop mit der niedrigsten Priorität (CPF), in den bestimmten Zustand setzen, wobei jedes Kontrollsignal auf den Empfang eines entsprechend Anforderungssignals ausgegeben wird, es sei denn, daß das Ausgangssignal eines Flip-Flops mit niedrigerer Priorität empfangen wurde;

(B) einen Logikzugriffsschaltkreis (CPG, SIG, CIG) zum Empfangen von Ausgangssignalen von allen Flip-Flops zum Ausgeben eines prioritätsbestimmenden Signals, welches das Bauteil mit der höchsten Priorität von allen Bauteilen repräsentiert, deren entsprechende Flip-Flops in dem bestimmten Zustand sind, wobei das prioritätsbestimmende Signal das ausgewählte Bauteil freigibt zum Erlangen des Zugriffs auf die gemeinsame Einrichtung; und

(C) einen Zeitmessungsschaltkreis (Fig. 2C), der auf das Setzen eines jeden Flip-Flops (TCF) reagiert, indem er einen Auswertimpuls (CLR) erzeugt, um den Logikzugriffsschaltkreiste nach einer Zeitverzögerung, die ausreichend ist, alle Übergangstehenzen abklingen zu lassen, freizugeben.

2. Prioritätsauflösungschaltkreis nach Anspruch 1, dadurch gekennzeichnet, daß das Flip-FLop der niedrigsten Priorität (CPF) direkt verbunden ist, um das Anforderungssignal der niedrigsten Priorität (CPR) zu empfangen und durch dieses in den bestimmten Zustand gesetzt zu werden.

3. Prioritätsauflösungsschaltkreis nach Anspruch 1 oder 2, dadurch gekennzeichnet, daß der Logikzugriffsschaltkreis (n−1) Gatter (CPG, SIG, CIG) aufweist, die der Vielzahl (n) von Bauteilen, ausgenommen dem Bauteil mit der höchsten Priorität, zugewiesen sind, wobei das Gatter (CPG), welches dem Bauteil mit der niedrigsten (Priorität (CPU) zugeordnet ist, (n+1) Eingänge hat, d.h. den Q-Ausgang des Flip-Flops mit der niedrigsten Priorität (CPF), die $\bar{Q}$-Ausgänge der verbleibenden (N−1) Flip-Flops (SIF, CIF, FIF) mit den nächstniedrigen Prioritäten und einen Eingang für das Nullstellsignal (CLR), welches von dem Zeitmessungsschaltkreis erzeugt wird (Fig. 2c); wobei das Gatter (SIG), welches dem Bauteil (SIP) mit der zweitniedrigsten Priorität zugeordnet ist, (n) Eingänge hat, d.h. den Q-Ausgang des Flip-Flops mit der zweitniedrigsten Priorität (SIF) und die $\bar{Q}$-Ausgänge der verbleibenden (N−2) Flip-Flops (CIF, FIF) mit der übernächst niedrigsten Priorität und den Nullstellsignaleingang (CLR); und so weiter, bis zu dem Gatter (CIG), welches dem Bauteil (CIP) mit der zweithöchsten Priorität zugeordnet ist, das drei Eingänge hat, d.h. den Q-Ausgangs des Flip-Flops mit der zweithöchsten Priorität (CIF) und den $\bar{Q}$-Ausgang des Flip-Flops mit der höchsten Priorität (FIF) und den Nullstellsignaleingang (CLR); wobei der Ausgang von jedem der (n−1) Gatter (CPG, SIG, CIG) der jeweiligen zugeordneten Einrichtung anzeigt, daß die Einrichtungsanfgrderung angenommen wurde.

4. Prioritätsauflösungsschaltkreis nach Anspruch 3, dadurch gekennzeichnet, daß die $\bar{Q}$-Ausgänge der (n) Flip-Flops (CPF, SIF, CIF, FIF) mit den (n) Eingängen eines ODER-Gatters (36) verbunden sind, um einen Zeitmessungsschaltkreis-Aktivierungsimpuls (TCF) zu erzeugen, der den Zeitmessungsschaltkreis (Fig. 2C) anstößt, sobald eines der Flip-Flops gesetzt ist, um das Nullstellsignal (CLR) nach einer kurzen Verzögerung, die ausreicht, um sicherzustellen, daß die Ausgleichsvorgänge in der Logikschaltung abgeklungen sind, zu erzeugen.

5. Prioritätsauflösungsschaltkreis nach Anspruch 4, dadurch gekennzeichnet, daß der Zeitmessungsschaltkreis (Fig. 2C) auch einen Rücksetzimpuls (RST) zum Rücksetzen der Flip-Flops (CPF, SIF, CIF, FIF) erzeugt, wobei der Rücksetzimpuls (RST) nach der Erzeugung des Nullstellsignals (CLR) erzeugt wird.

## Revendications

1. Ensemble de circuits de détermination de priorité utilisable dans un système d'ordinateur, dans lequel une pluralité (n) dispositifs (10, 11, 12, 15; UCT, PIS, PIC, ABP) sont en concurrence pour accéder à une unité partagée (26), chaque dispositif se voyant accorder une valeur de priorité relative respective pour obtenir ledit accès, dans lequel chacun desdits dispositifs génère un signal de demande (CPR, SIR, CIR, FIR) lorsque le dispositif demande l'accès, et dans lequel une bascule (CPF, SIF, CIF, FIF) est assignée à chaque dispositif pour enregister, lorsqu'elle est dans un état particulier, la réception du signal de demande correspondant, l'ensemble des circuits de détermination de priorité étant caractérisé par:

(A) un ensemble de circuits de demandes logiques (33 à 35) pour recevoir

(i) la totalité desdits signaux de demande à l'exception du signal de demande (CPR) correspondant au dispositif du rang de priorité le plus bas (10; UCT) et

(ii) les signaux de sortie provenant de toutes lesdites bascules à l'exception de la bascule (FIF) correspondant au dispositif du rang de priorité le plus haut (15, ABP), et répondant auxdits signaux reçus pour délivrer des signaux de contrôle qui mettent dans ledit état particulier toutes lesdites bascules, à l'exception de ladite bascule du rang de priorité le plus bas (CPF), chaque signal de contrôle étant délivré après réception d'un signal de demande correspondant, à moins qu'un signal de sortie provenant d'une bascule d'un rang de priorité inférieur ne soit reçu;

(B) un ensemble de circuits d'accès logiques (CPG, SIG, CIG) pour recevoir les signaux de sortie de toutes lesdites bascules, pour délivrer un signal de désignation de priorité représentant le dispositif occupant le rang de priorité le plus haut parmi tous les dispositifs dont les bascules correspondantes sont dans ledit état particulier, ledit signal de désignation de priorité autorisant le dispositifs représenté à obtenir l'accès à ladite unité partagée; et

(C) un ensemble de circuits de temporisation (Fig. 2C) répondant à la mise en marche de n'importe laquelle des bascules (ACT) pour générer une impulsion de porte (CLR) autorisant les circuits d'accès logiques après un temps de retard suffisant pour permettre la suppression des conditions transitoires.

2. Ensemble de circuits de détermination de priorité selon la revendication 1, caractérisé par le fait que ladite bascule du rang de priorité le plus bas (CPF) est reliée directement pour recevoir et pour être mise dans ledit état particulier par le signal de demande du rang de priorité le plus bas (CPR).

3. Ensemble de circuits de détermination de priorité selon la revendication 1 ou 2, caractérisé par le fait que l'ensemble de circuits d'accès logiques comprend (n-1) portes (CPG, SIG, CIG) qui sont associées à ladite pluralite (n) de dispositifs, à l'exception du dispositif de range le plus haut, la porte (CPG) associée au dispositif de range le plus bas (UCT) ayant (n+1) entrées, c'est-à dire la sortie-Q de la bascule de range de priorité le plus bas (CPF) et les sorties-$\bar{Q}$ des (N−1) bascules (SIF, CIF, FIF) occupant les rangs de priorité suivants, et une entrée de signal d'effacement (CLR) généré par le circuit de temporisation (Fig. 2C); la porte (SIG) associée au dispositif (PIS) de rang de priorité suivant le rang le plus bas ayant (n) entrées, c'est-à dire la sortie-(Q) de la bascule (SIF) de rang de priorité suivant le range le plus bas et les sorties-($\overline{Q}$) des (n−2) bascules restantes (CIF, FIF) occupant les rangs de priorité supérieurs aux deux rangs les plus bas, et ladite entrée de signal d'effacement (CLR); et ainsi de suite jusqu'à la porte (CIG) associée au dispositif (PIC) occupant le rang de priorité voisin du rang le plus élevé, et ayant trois entrées, c'est-à dire la sortie-(Q) de la bascule (CIF) de rang de priorité voisin du rang le plus élevé, et la sortie-($\overline{Q}$) des bascules (FIF) occupant le rang de priorité le plus élevé, et ladite entrée du signal d'effacement (CLR); la sortie de n'importe laquelle desdites (n−1) portes (CPG, SIG, CIG) indique à l'unité respectivement associée que la demande émise par cette unité est en cours de traitement.

4. Ensemble de circuits de détermination de priorité selon la revendication 3, caractérisé par le fait que les sorties-($\overline{Q}$) desdites (n) bascules (CPF, SIF, CIF, FIF) sont reliées aux (n) entrées d'une porte OU (36) pour produire une impulsion d'allumage du circuit de temporisation (ACT) quéclenche le circuit de temporisation (Fig. 2C) dès que n'importe laquelle desdites bascules est mise en marche, pour produire ledit signal d'effacement (CLR) après un court délai, suffisant pour garantir la dissipation des phénomènes transitoires dans l'ensemble des circuits logiques.

5. Ensemble de circuits de détermination de priorité selon la revendication 4, caractérisé par le fait que le circuit de temporisation (Fig. 2C) génère également une impulsion de remise à zéro (RST) pour remettre lesdites bascules (CPF, SIF, CIF, FIF) à zéro, ladite impulsion de remise à zéro (RST) étant générée après émission dudit signal d'effacement (CLR).

EP 0 087 266 B1

FIG.1

FIG.2B

1

FIG.2A

FIG.2C